# EUROPEAN PATENT APPLICATION

(11) **EP 3 974 884 A1**
(43) Date of publication of application: **30.03.2022**
(21) Application number: 20935541.1
(22) Date of filing: 10.12.2020
(51) Int. Cl.: G02B 6/44

(54) **METAL TUBE-TYPE LIGHTWEIGHT ARMORED FLAME-RETARDANT FIRE-RESISTANT OPTICAL CABLE**

(30) Priority: 14.05.2020 CN 202010407309
(71) Applicant: Hengtong Optic-Electric Co., Ltd., Suzhou, Jiangsu 215234 (CN)
(72) Inventor: WANG, Rui, Suzhou, Jiangsu 215234 (CN); LI, Wei, Suzhou, Jiangsu 215234 (CN); ZHOU, Feng, Suzhou, Jiangsu 215234 (CN); FEI, Huaqing, Suzhou, Jiangsu 215234 (CN); LIU, Peidong, Suzhou, Jiangsu 215234 (CN); YIN, Jikai, Suzhou, Jiangsu 215234 (CN); SHI, Huiping, Suzhou, Jiangsu 215234 (CN); SUN, Lihua, Suzhou, Jiangsu 215234 (CN); WU, Laiqiang, Suzhou, Jiangsu 215234 (CN)
(74) Representative: v. Bezold & Partner Patentanwälte - PartG mbB
(86) International application number: PCT/CN2020/135127
(87) International publication number: WO 2021/227477

(57) **Abstract**

The present invention provides a flame-retardant and fire-resistant optical cable of metal bundle tube type with lightweight armor, which satisfies CPR certification while improving the fire-resistant performance, so that the performance of the fire-resistant optical cable is greatly improved. Several loosely arranged optical fibers are arranged in an inner cavity of a stainless steel loose tube, and the inner cavity of the stainless steel loose tube is also filled with fiber paste; an outer annular surface of the stainless steel loose tube is provided with an inner protective layer, a fire-resistant belt, a glass fiber yarn layer, a steel-plastic composite belt and an outer sheath in sequence from inside to outside in a radial direction; the inner protective layer is specifically formed by covering the outer annular surface of the stainless steel loose tube with a highly flame-retardant, low-smoke and halogen-free material, and the outer annular surface of the inner protective layer is covered with the fire-resistant belt; an annular cavity between an outer wall of the fire-resistant belt and an inner wall of the steel-plastic composite belt is filled with glass fiber yarns, all the glass fiber yarns are combined to form the glass fiber yarn layer, an outer annular surface of the glass fiber yarn layer is covered with the steel-plastic composite belt, and the outer sheath is specifically formed by extrusion of a highly flame-retardant, low-smoke and halogen-free sheath material.

## Description

### FIELD OF THE PRESENT DISCLOSURE

The present invention relates to the technical field of optical cable structures, and in particular to a flame-retardant and fire-resistant optical cable of metal bundle tube type with lightweight armor.

### BACKGROUND OF THE PRESENT DISCLOSURE

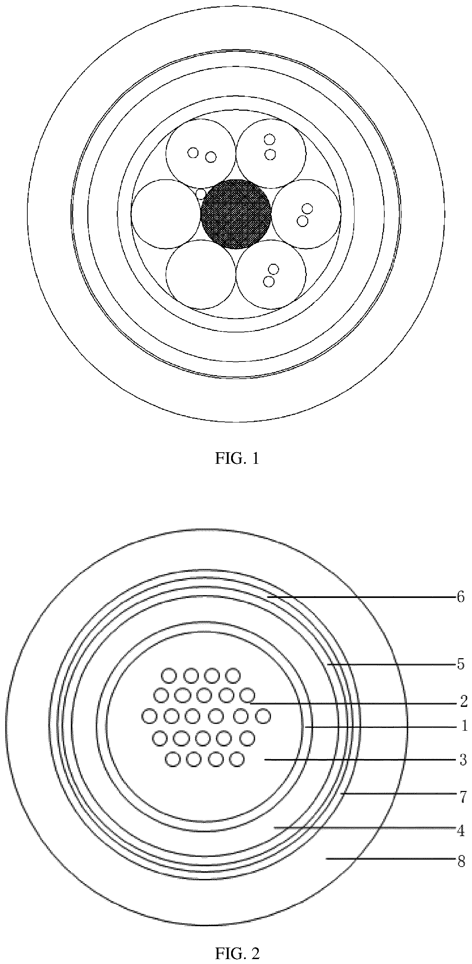

Optical cables are developing towards special type, lightweight type and small size structures. Special type optical cable needs to meet requirements of fire-resistant performance and CPR certification. Lightweight type and small size represent the choice of a center tube structure. The existing fire-resistant optical cable structure is shown in FIG. 1. Several cables with optical fibers are wrapped in a sleeve, and a corresponding protective layer is provided on the outer layer. During an actual experiment, the existing structure cannot meet the modern requirements of higher fire-resistant performance, and also cannot pass the CPR certification. Therefore, a new structure is urgently needed to meet both the fire-resistant performance and the CPR certification, and CPR B2ca certification (heat release ≤ 15 MJ, smoke release ≤ 50 m², peak heat release rate ≤ 30 kw, peak smoke release rate ≤ 0.5 m²/s, smoke density ≥ 80%, bundle burning length ≤ 1.5 m).

### SUMMARY OF THE PRESENT DISCLOSURE

In view of the above problems, the present invention provides a flame-retardant and fire-resistant optical cable of metal bundle tube type with lightweight armor, which satisfies CPR certification while improving the fire-resistant performance, so that the performance of the fire-resistant optical cable is greatly improved.

The flame-retardant and fire-resistant optical cable of metal bundle tube type with lightweight armor is characterized by comprising a stainless steel loose tube located at a radial center, wherein several loosely arranged optical fibers are arranged in an inner cavity of the stainless steel loose tube, and the inner cavity of the stainless steel loose tube is also filled with fiber paste; an outer annular surface of the stainless steel loose tube is provided with an inner protective layer, a fire-resistant belt, a glass fiber yarn layer, a steel-plastic composite belt and an outer sheath in sequence from inside to outside in a radial direction; the inner protective layer is specifically formed by covering the outer annular surface of the stainless steel loose tube with a highly flame-retardant, low-smoke and halogen-free material, and the outer annular surface of the inner protective layer is covered with the fire-resistant belt; an annular cavity between an outer wall of the fire-resistant belt and an inner wall of the steel-plastic composite belt is filled with glass fiber yarns, all the glass fiber yarns are combined to form the glass fiber yarn layer, an outer annular surface of the glass fiber yarn layer is covered with the steel-plastic composite belt, and the outer sheath is specifically formed by extrusion of a highly flame-retardant, low-smoke and halogen-free sheath material.

The flame-retardant and fire-resistant optical cable is further characterized in that a dry water-blocking filler is arranged between the steel-plastic composite belt and the outer sheath;
the fire-resistant belt is specifically a double-sided synthetic mica belt, a ceramic composite belt or a calcined mica belt capable of withstanding a high temperature of 1100°C, and the fire-resistant belt is longitudinally wrapped on the outer surface of the inner protective layer;
the stainless steel loose tube has a wall thickness of 0.1 mm to 0.3 mm;
the outer annular surface of the glass fiber yarn layer is longitudinally wrapped with a layer of the steel-plastic composite belt, and the steel-plastic composite belt is specifically a corrugated steel belt, the thickness of which is 0.15 mm to 0.30 mm, and the longitudinal wrapping overlapping width of which is 4 mm to 6 mm;
a base steel belt of the steel-plastic composite belt is a chromium-plated steel belt;
the optical fiber is specifically a colored optical fiber so as to facilitate subsequent assembly and differentiation;
the inner protective layer has a thickness of 1.0 mm to 1.5 mm.

By adopting the structure of the present invention, the optical cable structure is selected to be a composite structure of double armor layers + double flame-retardant protective layers + fire-resistant belts, so as to achieve a high level of flame-retardant and fire-resistant performance and satisfy CPR certification. This cable has the comprehensive advantages of flame-retardant and fire-resistant cable, and it has the advantages of easy installation, convenient connection and light weight, and is suitable for access network segment or tunnel traffic use, so that the performance of the fire-resistant optical cable is greatly improved.

### BRIEF DESCRIPTION OF THE DRAWINGS

FIG. 1 is a schematic cross-sectional view of a prior art fire-resistant optical cable;
FIG. 2 shows a schematic diagram of the cross-sectional structure of a first embodiment of the present invention;
FIG. 3 shows a schematic diagram of the cross-sectional structure of a second embodiment of the present invention.

The reference numbers in the figures are as follows:
1 the stainless steel loose tube
2 the optical fiber
3 the fiber paste
4 the inner protective layer
5 the fire-resistant belt
6 the glass fiber yarn layer
7 the steel-plastic composite belt
8 the outer sheath
9 the dry water-blocking filler

### DESCRIPTION OF THE EMBODIMENTS

FIG. 2 is a first embodiment of the flame-retardant and fire-resistant optical cable of metal bundle tube type with lightweight armor, which comprises: a stainless steel loose tube 1 located at a radial center, wherein several loosely arranged optical fibers 2 are arranged in an inner cavity of the stainless steel loose tube 1, and the inner cavity of the stainless steel loose tube 1 is also filled with fiber paste 3; an outer annular surface of the stainless steel loose tube 1 is provided with an inner protective layer 4, a fire-resistant belt 5, a glass fiber yarn layer 6, a steel-plastic composite belt 7 and an outer sheath 8 in sequence from inside to outside in a radial direction; the inner protective layer 4 is specifically formed by covering the outer annular surface of the stainless steel loose tube 1 with a highly flame-retardant, low-smoke and halogen-free material, and the outer annular surface of the inner protective layer 4 is covered with the fire-resistant belt 5; the annular cavity between an outer wall of the fire-resistant belt 5 and an inner wall of the steel-plastic composite belt 7 is filled with glass fiber yarns, all the glass fiber yarns are combined to form a glass fiber yarn layer 6, the outer annular surface of the glass fiber yarn layer 6 is covered with the steel-plastic composite belt 7, and the outer sheath 8 is specifically formed by extrusion of a highly flame-retardant, low-smoke and halogen-free sheath material.

The fire-resistant belt 5 is specifically a double-sided synthetic mica belt, a ceramic composite belt or a calcined mica belt capable of withstanding a high temperature of 1100°C, and the fire-resistant belt 5 is longitudinally wrapped on the outer surface of the inner protective layer 4.

The stainless steel loose tube 1 has a wall thickness of 0.1 mm to 0.3 mm.

The outer annular surface of the glass fiber yarn layer 6 is longitudinally wrapped with a layer of steel-plastic composite belt 7, wherein the steel-plastic composite belt 7 is specifically a corrugated steel belt, the thickness of which is 0.15 mm to 0.30 mm, and the longitudinal wrapping overlapping width of which is 4 mm to 6 mm.

The base steel belt of the steel-plastic composite belt 7 is a chromium-plated steel belt.

The optical fiber 2 is specifically a colored optical fiber so as to facilitate subsequent assembly and differentiation.

The inner protective layer 4 has a thickness of 1.0 mm to 1.5 mm.

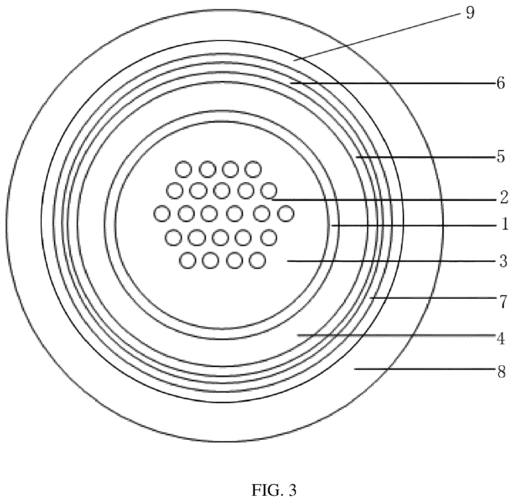

FIG. 3 is a second embodiment, and the structure of which may be referred to the first embodiment. The difference between the second embodiment and the first embodiment lies in that only a dry water-blocking filler 9 is added between the steel-plastic composite belt 7 and the outer sheath 8.

The beneficial effects of the present invention are as follows:

### 1. Structural Innovation

In order to achieve a high level of flame-retardant and fire-resistant performance, a composite structure of a double armor layer + a double flame-retardant protective layers + a fire-resistant belt is selected for the optical cable structure, wherein the double armor layer comprises a stainless steel loose tube and a steel-plastic composite belt. Using a laser spot welding technique, the stainless steel belt forms a stainless steel tube filled with the optical fiber by delivering an optical fiber and a special fiber paste into the stainless steel tube via discharging line. The steel-plastic composite belt provides a certain function of resisting lateral compression on the one hand, and can also provide a fire-resistant function. The double flame-retardant protective layers comprises an inner protective layer and an outer sheath. The inner protective layer is a low-smoke and halogen-free protective layer with a thickness of 1.0 mm to 1.5 mm extruded on a stainless steel loose tube. The low-smoke and halogen-free protective layer uses a full flame-retardant system, wherein the indexes such as an oxygen index are required to be very high, generally ≥ 42%. The outer sheath is a layer of low-smoke and halogen-free sheath material with a higher flame-retardant level extruded outside a steel-plastic composite belt. As an excellent high-grade fire-resistant belt, the fire-resistant belt can be used for the optical cable fire protection and can play a very good protective role, wherein the fire-resistant belt can withstand high temperature burning of 1100°C.

### 2. Raw Material Selection Innovation

The flame-retardant and fire-resistant optical cable of metal bundle tube type with lightweight armor adopts a variety of new materials, mainly including stainless steel loose tube, fire-resistant belt, highly flame-retardant, low-smoke and halogen-free materials. The stainless steel tube is filled with the special fiber paste and the colored optical fibers. The melting temperature of the stainless steel tube is close to 1500°C. The stainless steel tube forms a longitudinal sealing area, whereby the flame cannot cause damage to the optical fibers in the stainless steel tube, and the optical fibers can be well protected from flame and heat damage. The thicker the wall thickness of the stainless steel tube, the better the fire-retardant performance. However, the processability will also decline with the increase of the wall thickness, and therefore the stainless steel tube with a thickness of 0.1 to 0.3 mm is the best in general consideration.

Generally, double-sided synthetic mica belt, calcined mica belt and ceramic fire-resistant belt are selected as fire-resistant belts. The fire-resistant belts, especially the double-sided synthetic mica belt and the calcined mica belt, can significantly improve the fire-resistant performance of optical cable. The structure of the fire-resistant belt is that glass fiber yarn is used as the base material to form a dense grid by weaving, then synthetic mica powder is coated on both sides of the woven layer, and after drying and curing treatment, a double-sided synthetic mica belt with a 1 + 2 structure is formed, which can withstand a temperature up to 1100°C. Through wrapping or longitudinal wrapping on the outer layer of optical cable, the fire-resistant performance and fire-resistant performance of the product can be improved very well, and the product is an excellent fire-resistant material.

A low-smoke and halogen-free material with oxygen index of ≥ 42% is selected. An inorganic flame-retardant and organic flame-retardant system were selected for the low-smoke and halogen-free flame-retardant system. The inorganic flame-retardant was generally aluminum hydroxide, antimony oxide and so on. The organic flame-retardant included phosphorus and nitrogen flame-retardants. Through the reasonable ratio of the two types of flame-retardants and the study of flame-retardant mechanism, an efficient flame-retardant system was finally formed to achieve higher flame-retardant performance.

### 3. Process Innovation

The key process control points in the manufacture of optical cable with the above-mentioned structure are mainly the extrusion process of high-grade, low-smoke and halogen-free material and the 6-character die forming process of steel belt. The low smoke and halogen-free material has low melt index, high viscosity and high pressure sensitivity, so it has high requirements for extruder. Firstly, the temperature control system of the extruder must be stable, and the temperature deviation should not exceed 3°C in the production process. Secondly, the compression ratio of the screw is as small as possible, controlled at 1: 1.1 to 1: 1.5, and the screw diameter is between 80-90 mm. Thirdly, regarding set of the extrusion die, the extrusion die needs to select a compression type mold, the distance between a die core and a die sleeve is controlled in the range of 6 to 8 mm, and the deviation between a die sleeve size and an outer diameter of the sheath is controlled between (0, + 0.3). A three-piece die forming process including trumpet die, lapping die and sizing die is generally selected for the steel belt longitudinal wrapping process, wherein the sizes of various dies are determined according to the steel belt size, inner protective layer diameter, lapping width and other factors. The conventional three-piece die forming process has a large forming resistance (the resistance is about 280 N), multiple mold configurations, and high cost. It is difficult to adjust the center of the three-piece suit, which increases the difficulty of operation. The invention adopts the 6-character die forming process, wherein only two dies (the 6-character die and the sizing die) are needed in the longitudinal wrapping process, saving one die, cost saving about 15%. At the same time, the 6-character die forming resistance is small (the resistance is 190 N), and the production speed can be increased by 30%, which greatly reduces the risk of belt breakage and improves a product qualification rate.

It will be evident to those skilled in the art that the invention is not limited to the details of the foregoing illustrative embodiments, and that the present invention may be embodied in other specific forms without departing from the spirit or essential characteristics thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. Any reference sign in a claim should not be construed as limiting the claim concerned.

In addition, it should be understood that while the specification has been described in terms of embodiments, not every embodiment includes an independent technical solution, and such description is for clarity purposes only, those skilled in the art will recognize that the description as a whole, the technical solutions in the embodiments may also be combined appropriately to form other embodiments that can be understood by those skilled in the art.

## Claims

1. A flame-retardant and fire-resistant optical cable of metal bundle tube type with lightweight armor, **characterized by** comprising a stainless steel loose tube located at a radial center,
wherein several loosely arranged optical fibers are arranged in an inner cavity of the stainless steel loose tube, and the inner cavity of the stainless steel loose tube is filled with fiber paste;
an outer annular surface of the stainless steel loose tube is provided with an inner protective layer, a fire-resistant belt, a glass fiber yarn layer, a steel-plastic composite belt and an outer sheath in sequence from inside to outside in a radial direction;
the inner protective layer is specifically formed by covering the outer annular surface of the stainless steel loose tube with a highly flame-retardant, low-smoke and halogen-free material;
an outer annular surface of the inner protective layer is covered with the fire-resistant belt;
an annular cavity between an outer wall of the fire-resistant belt and an inner wall of the steel-plastic composite belt is filled with glass fiber yarns;
all the glass fiber yarns are combined to form the glass fiber yarn layer;
an outer annular surface of the glass fiber yarn layer is covered with the steel-plastic composite belt; and
the outer sheath is specifically formed by extrusion of a highly flame-retardant, low-smoke and halogen-free sheath material.

2. The flame-retardant and fire-resistant optical cable of metal bundle tube type with lightweight armor according to claim 1, **characterized in that** a dry water-blocking filler is arranged between the steel-plastic composite belt and the outer sheath.

3. The flame-retardant and fire-resistant optical cable of metal bundle tube type with lightweight armor according to claim 1, **characterized in that** the fire-resistant belt is specifically a double-sided synthetic mica belt, a ceramic composite belt or a calcined mica belt capable of withstanding a high temperature of 1100°C, and the fire-resistant belt is longitudinally wrapped on an outer surface of the inner protective layer.

4. The flame-retardant and fire-resistant optical cable of metal bundle tube type with lightweight armor according to claim 1, **characterized in that** the stainless steel loose tube has a wall thickness of 0.1 mm to 0.3 mm.

5. The flame-retardant and fire-resistant optical cable of metal bundle tube type with lightweight armor according to claim 1, **characterized in that** the outer annular surface of the glass fiber yarn layer is longitudinally wrapped with a layer of the steel-plastic composite belt, and the steel-plastic composite belt is specifically a corrugated steel belt, the thickness of which is 0.15 mm to 0.30 mm, and the longitudinal wrapping overlapping width of which is 4 mm to 6 mm.

6. The flame-retardant and fire-resistant optical cable of metal bundle tube type with lightweight armor according to claim 1, **characterized in that** a base steel belt of the steel-plastic composite belt is a chromium-plated steel belt.

7. The flame-retardant and fire-resistant optical cable of metal bundle tube type with lightweight armor according to claim 1, **characterized in that** the optical fiber is specifically a colored optical fiber.

8. flame-retardant and fire-resistant optical cable of metal bundle tube type with lightweight armor according to claim 1, **characterized in that** the inner protective layer has a thickness of 1.0 mm to 1.5 mm.
